# EUROPÄISCHE PATENTSCHRIFT

(11) **EP 3 334 243 B1**
(45) Veröffentlichungstag und Bekanntmachung des Hinweises auf die Patenterteilung: **08.01.2020**
(21) Anmeldenummer: 17154768.0
(22) Anmeldetag: 06.02.2017
(51) Int. Cl.: H05B 3/24, B60H 1/22, F24H 3/04, F24H 9/18, H05B 1/02, F24H 1/00, F24H 1/12, F24H 9/20, F24H 1/10

(54) **ELEKTRISCHE HEIZVORRICHTUNG**
ELECTRIC HEATING DEVICE
DISPOSITIF DE CHAUFFAGE ÉLECTRIQUE

(30) Priorität: 06.12.2016 DE 102016224296
(43) Veröffentlichungstag der Anmeldung: 13.06.2018
(73) Patentinhaber: Eberspächer catem GmbH & Co. KG, 76863 Herxheim (DE)
(72) Erfinder: Bohlender, Franz, 76870 Kandel (DE); Schwarzer, Andreas, 60433 Frankfurt am Main (DE); Niederer, Michael, 76889 Kapellen-Drusweiler (DE)
(74) Vertreter: Grünecker Patent- und Rechtsanwälte PartG mbB

(56) Entgegenhaltungen:
- EP-A1- 2 607 121
- EP-A1- 2 797 381
- EP-A1- 2 884 817
- DE-U1- 20 023 727
- DE-U1- 29 825 093
- FR-A1- 2 858 166
- US-A1- 2013 230 302

## Beschreibung

Die vorliegende Erfindung betrifft eine elektrische Heizvorrichtung mit einem Gehäuse, das Ein- und Auslassöffnungen für das zu erwärmende Fluid und eine Zirkulationskammer sowie eine von der Zirkulationskammer durch eine fluiddichte Trennwand getrennte Anschlusskammer ausbildet. In der Zirkulationskammer liegt eine wärmeabgebende Fläche eines PTC-Heizelementes frei. Diese wärmeabgebende Fläche ist wärmeleitend mit einem PTC-Element gekoppelt. Das PTC-Element ist mit elektrischen Leiterbahnen zu unterschiedlichen Polaritäten elektrisch leitend kontaktiert, die in der Anschlusskammer elektrisch angeschlossen sind.

Eine solche elektrische Heizvorrichtung kann gemäß EP 1 768 459 A1 ausgebildet sein und als elektrische Heizvorrichtung zur Lufterwärmung zum Einsatz kommen. Sie kann aber insbesondere als Flüssigkeitsheizer ausgebildet sein, wie dies beispielsweise aus der EP 1 872 986 A1 bekannt ist. Bei diesem Stand der Technik ragen Heizrippen in die Zirkulationskammer hinein, welche von dem zu erwärmenden flüssigen Fluid durchströmt ist. Die Heizrippen bilden eine U-förmige Tasche aus, in welcher das PTC-Element sowie die Leiterbahnen und jeweils außenseitig an den Leiterbahnen Isolierschichten aufgenommen sind. Dadurch sind die PTC-Elemente und die zur Bestromung beidseitig daran anliegenden Leiterbahnen elektrisch isolierend in der Heizrippe aufgenommen. Dabei bestehen die Heizrippe und die Trennwand aus Metall. Durch die die Heizrippe bildenden Wandungen wird die von dem PTC-Element erzeugte Wärme nach außen an die Außenfläche der Heizrippe geleitet und dort an das zu erwärmende flüssige Medium abgegeben.

Die vorliegende Erfindung betrifft insbesondere eine elektrische Heizvorrichtung für die Beheizung eines Kraftfahrzeuges, insbesondere eines Personenkraftwagens. Die elektrische Heizvorrichtung ist dementsprechend ein Bauteil, welches sich wirtschaftlich herstellen lassen muss.

Grundsätzlich ist bei Einbauteilen für Kraftfahrzeuge darauf zu achten, dass die Einbauteile gewichtsoptimiert ausgebildet sind. Mit Blick darauf schlägt die ebenfalls als gattungsgemäß anzusehende EP 2 797 381 A1 eine elektrische Heizvorrichtung mit einem Gehäuse vor, welches einen die Trennwand ausbildenden Gehäusedeckel umfasst, der als Aluminium-Druckgussbauteil hergestellt ist und dichtend auf ein Gehäuseunterteil aufgesetzt ist, welches die Zirkulationskammer umfänglich umgibt und welches als spritzgegossenes Kunststoffteil ausgebildet und damit im Gewicht reduziert ist.

Die zuletzt diskutierte Lösung lässt sich zwar wirtschaftlicher herstellen und ist auch gegenüber früheren Vorschlägen mit einem reinen Metallgehäuse im Gewicht reduziert. Es bleiben aber insbesondere mit Blick auf die Elektromobilität und den zunehmenden Einsatz von elektrischen Heizvorrichtungen als Flüssigkeitsheizer in den Kraftfahrzeugen noch Wünsche offen.

Die vorliegende Erfindung will eine elektrische Heizvorrichtung angeben, die leicht ist und sich kostengünstig herstellen lässt.

Zur Lösung dieser Aufgabe wird mit der vorliegenden Erfindung eine elektrische Heizvorrichtung mit den Merkmalen von Anspruch 1 vorgeschlagen. Diese elektrische Heizvorrichtung hat ein Gehäuse, welches die Zirkulationskammer und die Anschlusskammer ausbildet, wobei in der Zirkulationskammer das zu erwärmende Fluid strömt und in der Anschlusskammer der elektrische Anschluss des PTC-Heizelementes an den Leistungsstrom erfolgt. Es versteht sich von selbst, dass mehrere PTC-Heizelemente in der Zirkulationskammer vorgesehen sein können. Diese können in an sich bekannter Weise innerhalb der Anschlusskammer über eine elektrisch leitende Platte bzw. Platine zu Heizkreisen gruppiert werden. Diese elektrische leitende Platte oder Platine kann sich durch das Fehlen jeglicher elektronischer Bauteile auszeichnen und dient lediglich der Gruppierung der einzelnen PTC-Elemente zu Heizkreisen. Eine solche Platte ist bevorzugt gemäß der Lehre von EP 2 505 931 ausgebildet. Parallel hierzu in der Anschlusskammer kann eine weitere elektrisch leitende Platte oder Platine vorgesehen sein, die mit Bauteilen bestückt sein kann, um den Steuerstrom und/oder den Leistungsstrom zu den einzelnen PTC-Heizelementen zu verarbeiten bzw. zu steuern.

Die vorliegende Erfindung zeichnet sich durch ein aus Kunststoff gebildetes Gehäusebasisteil aus, das die Trennwand und Wandungen ausformt, die die Zirkulationskammer und die Anschlusskammer umfänglich umgeben. Dieses Gehäusebasisteil ist als einteiliges Bauteil ausgebildet. Es bildet die Basis des Gehäuses, welches aus Kunststoff, vorzugsweise vollständig aus Kunststoff ausgebildet ist. Durch das Gehäusebasisteil werden im Grunde die Zirkulationskammer und die Anschlusskammer definiert. Lediglich endseitige Deckel müssen auf das Gehäusebasisteil aufgesetzt werden, um einerseits die Zirkulationskammer und andererseits die Anschlusskammer vollständig abzuschließen. Das Gehäusebasisteil bildet ferner die Ein- und Auslassöffnungen zu der Zirkulationskammer aus, besonders bevorzugt in Form von Anschlussstutzen für den Anschluss eines Flüssigkeitsschlauches oder -rohres.

In eine Querschnittsansicht ist das Gehäusebasisteil H-förmig ausgebildet, wobei der Quersteg des H durch die Trennwand gebildet ist, die auf einer Seite die Anschlusskammer und auf der anderen Seite die Zirkulationskammer vorgibt. Von dem Gehäusebasisteil kann ferner eine im Wesentlichen rechtwinklig von der Trennwand abragende Teilung ausgebildet sein, die die Zirkulationskammer in eine Einlasszirkulationskammer und eine Auslasszirkulationskammer teilt.

Durch die Teilung sind zwei Heizkammern innerhalb der Zirkulationskammer ausgebildet, in denen sich jeweils zumindest ein PTC-Element befindet, wobei eine der Heizkammern mit der Einlassöffnung und die andere der Heizkammern mit der Auslassöffnung unmittelbar kommuniziert. Dazwischen ist üblicherweise ein Verbindungskanal vorgesehen. Dieser kann durch eine sich rechtwinklig zu der Trennwand und sich rechtwinklig zu der Teilung erstreckende Kanalwand ausgebildet sein, die ebenfalls als Teil der Gehäusebasis ausgeformt ist. Die Teilung und die Kanalwandung können durch korrespondierende Wandsegmente fortgesetzt sein, die durch einen die Zirkulationskammer abdeckenden Gehäusedeckel ausgebildet sein können. Ein solcher Gehäusedeckel liegt aber üblicherweise mit seiner Außenumfangsfläche unmittelbar auf den die Zirkulationskammer umgebenden und durch die Gehäusebasis gebildeten Wandungen auf.

Die vorliegende Erfindung bietet mithin die Möglichkeit, durch das Gehäusebasisteil das zentrale Element der Heizvorrichtung als einteiliges Bauteil auszuformen. Das Gehäusebasisteil kann dabei innerhalb der Trennwand Steckaufnahmen für das dichtende Anordnen von PTC-Heizelementen ausbilden, die zunächst durch Aufstecken an der Trennwand befestigt werden.

Die erfindungsgemäße Heizvorrichtung hat auch eine Steuerkammer zur Aufnahme einer Steuervorrichtung, die in baulicher Einheit mit dem Leistungsteil der elektrischen Heizvorrichtung ausgebildet ist. Der Leistungsteil wird dabei insbesondere durch die Zirkulationskammer und die hierin aufgenommenen PTC-Heizelemente gebildet. Diese Steuerkammer kann zusammen mit der Anschlusskammer ausgebildet sein. In diesem Fall hat die elektrische Heizvorrichtung lediglich zwei Kammern. Alternativ kann die Steuerkammer auch als separate Kammer zu der Anschlusskammer ausgebildet sein. In diesem Fall nimmt die Anschlusskammer beispielsweise lediglich elektrisch leitende Platten oder Platinen auf, die der Gruppierung von einzelnen PTC-Heizelementen zu einem Heizkreis dienen. Eine mit elektronischen Bauteilen bestückte Leiterplatte nimmt die Anschlusskammer dann nicht auf. Eine solche Leiterplatte ist in der separat hierzu vorgesehenen Steuerkammer vorgesehen. Diese Steuerkammer wird durch das Gehäuse ausgebildet. Gemäß einer bevorzugten Weiterbildung der vorliegenden Erfindung bildet das Gehäusebasisteil auch die die Steuerkammer umfänglich umgebenden Wandungen aus. Bei dieser bevorzugten Weiterbildung sind somit zumindest drei unterschiedliche Kammern, denen jeweils eine bestimmte Funktion zukommt, nämlich einerseits das Heizen des zu erwärmenden bevorzugt flüssigen Fluids (Zirkulationskammer), das Gruppieren der PTC-Heizelemente zu Heizkreisen (Anschlusskammer) und schließlich das Verarbeiten bzw. Steuern von Steuersignalen und Leistungsstrom (Steuerkammer).

Das Gehäusebasisteil ist bevorzugt aus einem vernetzenden Kunststoff ausgebildet, also keinem Thermoplasten, sondern beispielsweise einem Duroplasten. Die Auswahl dieses Materials führt zu einem besonderen technischen Effekt, sofern zwischen zwei unterschiedlichen Kammern der elektrischen Heizvorrichtung eine Stromschiene sich erstreckend vorgesehen ist, die mittels Umspritzen in den Gehäusebasisteil aufgenommen ist. Dabei ist die Stromschiene durch das Umspritzen abgedichtet in dem Gehäusebasisteil aufgenommen, d. h. in einer Wand, die eine Anschlusskammer von der anderen Anschlusskammer trennt. Die Stromschiene bildet bevorzugt an sich gegenüberliegenden Enden Kontaktzungen für das Aufstecken einer leitenden Platte oder Platine aus. Dadurch können elektrische Leiterbahnen beispielsweise einer Leiterplatte oder einer elektrisch leitenden Platte durch Aufsetzen auf einfache Weise mit der Stromschiene steckverbunden werden. Es hat sich herausgestellt, dass Duroplasten beim Umspritzen einen innigen und abdichtenden Verbund mit der Stromschiene bewirken.

Die entsprechende Wand kann durch die Trennwand zwischen der Zirkulationskammer und der Anschlusskammer gebildet sein. Sie kann aber auch durch eine Wand gebildet sein, die sich zwischen der Anschlusskammer und der Steuerkammer erstreckt.

Eine solche Wand wird bevorzugt als Steuerkammerboden durch die Gehäusebasis ausgebildet. Ein solcher Steuerkammerboden hat bevorzugt eine Durchgangsöffnung, in der ein Kühlkörper dichtend eingesetzt ist. Der Kühlkörper ist mit seinem einen Ende wärmeleitend mit der Zirkulationskammer gekoppelt und mit seinem anderen Ende innerhalb der Steuerkammer mit einem Verlustleistung erzeugenden Bauteil der Steuervorrichtung. Der Kühlkörper kann gänzlich aus Metall, beispielsweise Aluminium oder Kupfer ausgebildet sein. Für den Fall, dass die Steuerkammer identisch mit der Anschlusskammer ist, entspricht der hier erwähnte Steuerkammerboden der zwischen der Zirkulationskammer und der Anschlusskammer vorgesehenen Trennwand, die in diesem Fall mit der Durchgangsöffnung versehen ist.

Gemäß einer bevorzugten Weiterbildung der vorliegenden Erfindung liegt der Kühlkörper in einem Kühlkanal der Zirkulationskammer frei. Dieser Kühlkanal der zuvor bereits erwähnte Verbindungskanal innerhalb der Zirkulationskammer sein, der durch eine Kanalwand von der Heizkammer abgeteilt ist. Das Anordnen des zu kühlenden Endes des Kühlkörpers hinter der Kanalwand führt zu einer Strahlungsabschirmung zwischen dem Kühlkörper und dem in der Zirkulationskammer vorgesehenen PTC-Heizelement. So wird der Kühlkörper nicht unmittelbar mit der von dem PTC-Heizelement abgegebenen Strahlungswärme beaufschlagt. Mit dieser Formulierung soll zum Ausdruck gebracht werden, dass das zu kühlende Ende des Kühlkörpers zwar in der Zirkulationskammer freiliegt, allerdings kein PTC-Element "sieht".

Der Kühlkörper ist bevorzugt über einen Bajonettverschluss in der Durchgangsöffnung gehalten. Dabei kann der Kühlkörper als im Wesentlichen zylindrisches Bauteil ausgebildet sein, der an gegenüberliegenden Umfangssegmenten von Verriegelungsvorsprüngen überragt ist, die nach dem Fügen des Bajonettverschlusses in der Regel an einer der die Zirkulationskammer umfänglich umgebenden Wandungen anliegen, wodurch das Kühlelement verriegelt ist. Es versteht sich von selbst, dass die Durchgangsöffnung mit axial verlaufenden Nuten versehen sein muss, die zur Durchführung der Verriegelungsvorsprünge geeignet ausgebildet sind, wie dies bei einem Bajonettverschluss üblich ist. Zum Fügen des Kühlkörpers wird dieser üblicherweise von der Steuerkammerseite in Richtung auf die Zirkulationskammer eingeschoben, üblicherweise unter Mitnahme und Einschluss eines Dichtungselementes, beispielsweise in Form eines Dichtringes, welches den Kühlkörper gegenüber der die Durchgangsöffnung begrenzenden Wandung abdichtet. An seiner der Zirkulationskammer abgewandten Seite hat der Kühlkörper üblicherweise einen Kragen, der an einem die Durchgangsöffnung steuerseitig begrenzenden Rand anliegt.

Bei der zuvor diskutierten Weiterbildung mit einer Zirkulationskammer, einer Anschlusskammer und einer Steuerkammer, wobei Anschlusskammer und Steuerkammer voneinander getrennt vorgesehen sind, bildet das Gehäusebasisteil bevorzugt eine erste Kunststoffwanne aus, die die Umfangsflächen der Zirkulationskammer ausbildet, eine zweite Kunststoffwanne, die die Umfangsflächen der Anschlusskammer ausbildet, und eine dritte Kunststoffwanne, die die Umfangsflächen der Steuerkammer ausbildet. Wie bereits erwähnt, teilen sich üblicherweise die erste und die zweite Kunststoffwanne einen Boden, der durch die Trennwand gebildet ist. So sind die erste und die zweite Kunststoffwanne zu gegenüberliegenden Seiten hin offen und durch die Trennwand voneinander getrennt. Die dritte Kunststoffwanne erstreckt sich dabei rechtwinklig zu der ersten und der zweiten Kunststoffwanne. Dementsprechend ist die Haupterstreckungsrichtung eines die dritte Kunststoffwanne abdeckenden Gehäusedeckels rechtwinklig zu der Haupterstreckungsrichtung der Gehäusedeckel, die die erste und die zweite Kunststoffwanne abdecken. Der Boden der dritten Kunststoffwanne wird dabei üblicherweise durch ein durch das Gehäusebasisteil gebildetes Wandsegment ausgeformt, welches eine Umfangswand der Anschlusskammer und eine Umfangswand der Zirkulationskammer üblicherweise in gradliniger Verlängerung ausbildet.

Jeder der zuvor erwähnten Gehäusedeckel zu der Anschlusskammer, der Zirkulationskammer bzw. der Steuerkammer ist bevorzugt aus Kunststoff, besonders bevorzugt aus Duroplast ausgebildet. Zur dichten Verbindung zwischen den jeweiligen Gehäusedeckel und dem Gehäusebasisteil sind die die Anschlusskammer, die Zirkulationskammer und/oder die Steuerkammer umfänglich umgebenden Wandungen stirnseitig mit einer umlaufenden Nut versehen. In diese Nut wird vor dem Fügen des jeweiligen Gehäusedeckels ein Kleber, insbesondere ein Epoxidkleber eingebracht. Der Gehäusedeckel hat einen umlaufenden Kranz, der in die umlaufende Nut eingebracht wird und zusammen mit einem weiteren parallel dazu umlaufenden Steg eine Gegennut ausformt, in die üblicherweise ein innerer Steg, der die umlaufende Nut inwärtig begrenzt, eingreift, wonach eine Art Labyrinthdichtung entsteht, die aufgrund der volumetrischen Dosierung des Klebers in die Nut nach dem Andrücken des Gehäusedeckels im Wesentlichen vollständig von Kleber gefüllt ist.

Gemäß einer bevorzugten Weiterbildung der vorliegenden Erfindung ist eine sich zwischen zwei unterschiedlichen Kammer erstreckende Stromschiene vorgesehen, die mittels Umspritzen abgedichtet in dem Gehäusebasisteil aufgenommen ist. Dieses ist insbesondere für diese bevorzugte Ausgestaltung aus einem Duroplasten gebildet. Der Duroplast umschließt und siegelt die Stromschiene innerhalb des Materials ein, so dass zwischen den beiden Kammern entlang der Stromschienenaußenfläche eine sichere Abdichtung gegeben ist.

Eine solche Ausgestaltung kann beispielsweise zwischen der Steuerkammer und der Anschlusskammer einen Steuerboden durchsetzend vorgesehen sein. Ein solcher Steuerkammerboden begrenzt unterseitig die Steuerkammer und bildet eine die Anschlusskammer umfänglich umgebende Wandung aus. Die in dieser Weise vorgesehene Stromschiene ist bei der Weiterbildung der vorliegenden Erfindung als Anschlusselement zwischen einer in der Steuerkammer aufgenommenen Leiterplatte und der Anschlusskammer ausgebildet. Die Stromschiene kann als Steckelement vorgesehen sein und durch Steckkontakte mit der Leiterplatte einerseits und einer innerhalb der Anschlusskammer vorgesehenen leitenden Platte andererseits elektrisch kontaktiert sein. Diese Platte kann gemäß EP 2 505 931 A1 ausgebildet sein. Innerhalb der Anschlusskammer erstreckt sich der durch die Stromschiene ausgebildete Steckkontakt bevorzugt parallel zu Kontaktzungen des PTC-Heizelementes, so dass der Steckkontakt zu dem PTC-Heizelement und der Steckkontakt zu der Stromschiene durch Aufstecken einer elektrisch leitenden Platte in einer vorbestimmten Richtung, üblicherweise durch Einsenken der leitenden Platte in die Anschlusskammer bewirkt werden kann.

Gemäß einer bevorzugten Weiterführung der vorliegenden Erfindung ist der Kühlkörper mittels Umspritzen in dem Gehäuse dichtend aufgenommen. Auch bei dieser Ausgestaltung wird bevorzugt das Gehäuse aus einem Duroplasten gebildet. Der Kühlkörper kann an seiner Außenumfangsfläche einen oder mehrere regelmäßig umfänglich umlaufende Befestigungskragen aufweisen, die zusammen mit dem erstarrten Kunststoff des Gehäuses eine Labyrinthdichtung ausbilden und dementsprechend sowohl die sichere Befestigung des Kühlkörpers in dem Gehäuse wie auch die Dichtigkeit verbessern. Beim Umspritzen kann eine zu der Anschlusskammer weisende Oberfläche des Kühlkörpers von einem das Gehäuse ganz oder teilweise ausbildenden Kunststoff überzogen werden, um eine elektrisch isolierende Anlagefläche für einen Leistungstransistor zu schaffen, der wärmeleitend mit dem Kühlkörper verbunden ist, um die von dem Leistungstransistor erzeugte Verlustleistung an das zu erwärmende Medium innerhalb der Zirkulationskammer abzugeben. Die Isolierung kann als dünner Film einteilig mit dem Gehäuse ausgebildet sein. Dadurch ist das Anordnen einer separaten elektrischen Isolierung zwischen dem Kühlkörper und dem Leistungstransistor entbehrlich. Die Herstellung wird vereinfacht.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: eine perspektivische Draufsicht auf ein erstes Ausführungsbeispiel eines Gehäuses;
- Figur 2: eine perspektivische Seitenansicht des in Figur 1 gezeigten Ausführungsbeispiels;
- Figur 3: eine in dem ersten Ausführungsbeispiel vorgesehene Abdeckplatte 22 in isolierter Darstellung zusammen mit PTC-Heizelementen;
- Figur 4: die in Figur 3 gezeigte Abdeckplatte beim Bestücken mit einem PTC-Heizelement;
- Figur 5: eine seitliche perspektivische Schnittansicht eines zweiten Ausführungsbeispiels der vorliegenden Erfindung;
- Figur 6: das Detail VI gemäß der Darstellung in Figur 5;
- Figur 7: eine perspektivische Sicht in die Steuerwanne des zweiten Ausführungsbeispiels;
- Figur 8: eine perspektivische Längsschnittansicht entlang der Linie VIII-VIII gemäß der Darstellung in Figur 7;
- Figur 9: eine perspektivische, teilweise aufgebrochene Seitenansicht des zweiten Ausführungsbeispiels mit einer an dem Kunststoffgehäuse vorgesehenen Abschirmung;
- Figur 10: eine perspektivische Seitenansicht von Teilen des PTC-Heizelementes;
- Figur 11: eine teilweise gebrochene perspektivische Seitenansicht des PTC-Heizelementes;
- Figur 12: eine perspektivische Querschnittsansicht des PTC-Heizelementes;
- Figur 13: eine Längsschnittansicht durch die Abdeckplatte gemäß den Figuren 3, 4 mit einem einzelnen darin aufgenommenen PTC-Heizelement;
- Figur 14: eine perspektivische Seitenansicht bei entfernten Gehäusedeckel eines weiteren Ausführungsbeispiels;
- Figur 15: eine Ansicht ähnlich zu Figur 14 ohne Gehäusedeckel des weiteren Ausführungsbeispiels und
- Figur 16: eine perspektivische Schnittansicht durch die Trennwand des weiteren Ausführungsbeispiels.

### 1. Grundsätzlicher Aufbau der Heizvorrichtung

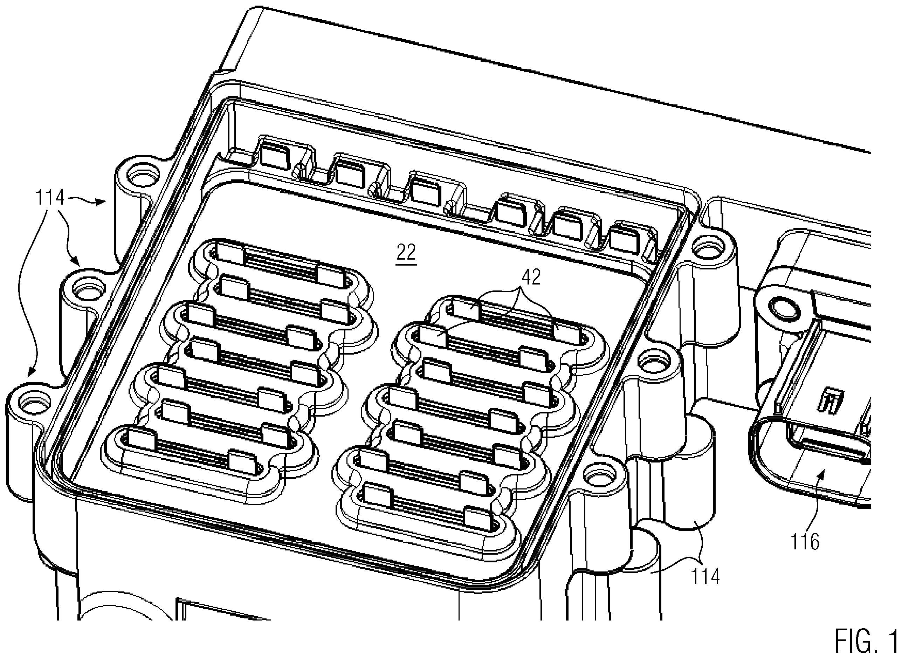

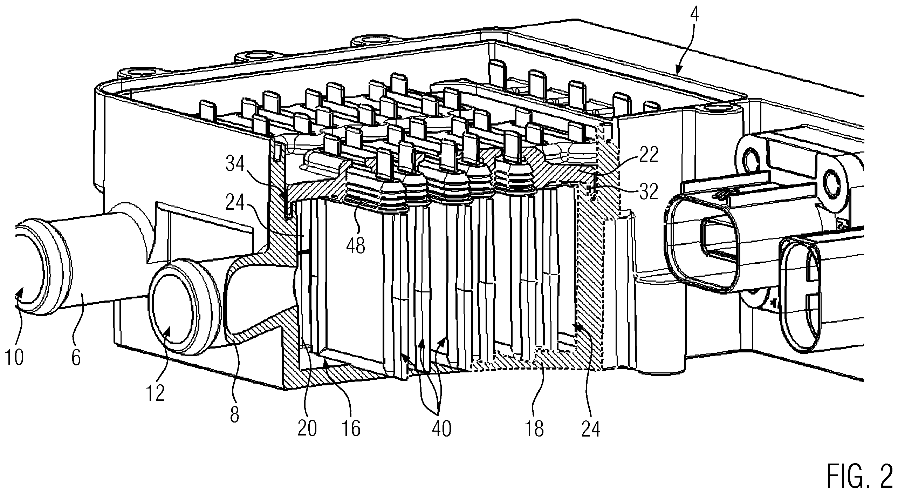

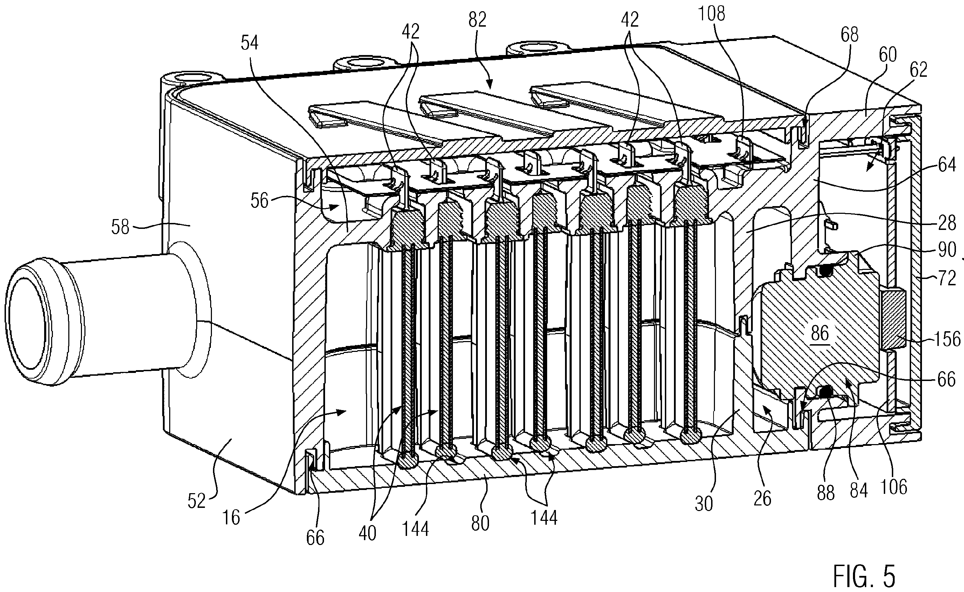

Figur 1 zeigt eine perspektivische Draufsicht auf ein mit Bezugszeichen 2 gekennzeichnetes Gehäuse einer als Wasserheizer ausgebildeten elektrischen Heizvorrichtung. Das Gehäuse 2 hat ein Gehäusewannenelement 4 aus Kunststoff. Dieser Kunststoff ist vorliegend ein Duroplast. Das Gehäuse 2 bildet einen Einlassstutzen 6 und einen Auslassstutzen 8 aus, die vorliegend einteilig an dem Gehäusewannenelement 4 ausgebildet sind. Die Stutzen 6, 8 sind als Schlauchanschlussstutzen ausgebildet und bilden eine Einlassöffnung 10 bzw. eine Auslassöffnung 12 zu einer mit Bezugszeichen 14 gekennzeichneten Zirkulationskammer aus. Die Zirkulationskammer 14 ist in zwei Heizkammern geteilt, von denen in den Figuren 1 und 2 lediglich die in der Darstellung vordere Heizkammer 16 zu erkennen ist. Die Unterteilung der Zirkulationskammer 14 erfolgt durch eine einteilig an dem Gehäusewannenelement 4 ausgebildete und von dessen Boden 18 nach innen abragende Teilungswand 20, die durch eine an einer mit Bezugszeichen 22 gekennzeichneten Abdeckplatte ausgebildete und mit Bezugszeichen 24 gekennzeichnete weitere Teilungswand 24 ihre Fortsetzung findet. An der den beiden Stutzen 6, 8 gegenüberliegenden Seite sind die beiden Heizkammern 16 durch einen Verbindungskanal miteinander verbunden, der in dem zweiten Ausführungsbeispiel eines Gehäuses 2 gemäß Figur 5 zu erkennen und dort mit Bezugszeichen 26 gekennzeichnet ist. Dieser Verbindungskanal 26 wird durch ein Kanalwandsegment 28, welches einteilig an der Abdeckplatte 22 angeformt ist und sich rechtwinklig zu der Teilungswand 20 erstreckt, und ein Kanalwandsegment 30, welches von dem Boden 18 des Gehäusewannenelementes 4 abragt, von der Heizkammer 16 getrennt.

Die Abdeckplatte 22 ist aus Kunststoff hergestellt. Vorliegend ist die Abdeckplatte 22 aus einem Duroplasten gebildet. Grundsätzlich hat die Verwendung von Duroplasten zur Herstellung des Gehäuses 2 oder Teile davon den Vorteil, dass ein Duroplast eine relativ hohe Temperaturbeständigkeit von etwa 150°C hat und auch bei Temperaturen von -40 °C keine Sprödigkeit zeigt. Damit ergibt sich für ein aus einem Duroplasten ganz oder teilweise gebildeten Gehäuse eine bessere Temperaturbeständigkeit bei Anforderungen, die im Heizbetrieb und beim Betrieb von Fahrzeugen in arktischen Regionen auftreten. Der Duroplast ist aber auch zu bevorzugen gegenüber einem Thermoplasten, da ein Duroplast eine bessere Kriechstrom-Festigkeit als ein Thermoplast hat.

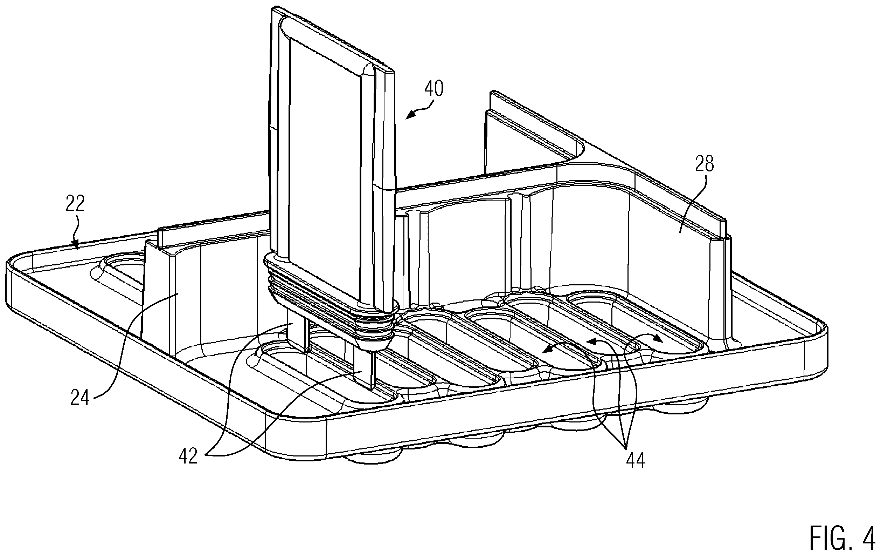

Die Figur 4 zeigt die Abdeckplatte 22 ohne das Gehäusewannenelement 4. Die Abdeckplatte 22 hat einen umlaufenden Rand 32, der mit einer an dem Gehäusewannenelement 4 ausgebildeten umlaufenden Nut 34 zusammenwirkt. Diese Nut 34 ist mit Kleber, vorliegend Epoxidkleber gefüllt, bevor der Rand 32 in die Nut 34 eindringt, um das Abdeckelement 22 mit dem Gehäusewannenelement zu verkleben. In gleicher Weise werden die Segmente 24 bzw. 28 mit den korrespondierenden Wandelementen 20 bzw. 30 des Gehäusewannenelementes 4 gefügt. Danach ist die Zirkulationskammer 14 fluiddicht zwischen dem Boden 18 des Gehäusewannenelementes 4 und dem Abdeckelement 22 und umfänglich umgeben von Wandungen eingeschlossen, die durch das Gehäusewannenelement 4 gebildet sind und die sich rechtwinklig zu dessen Boden 18 erstrecken.

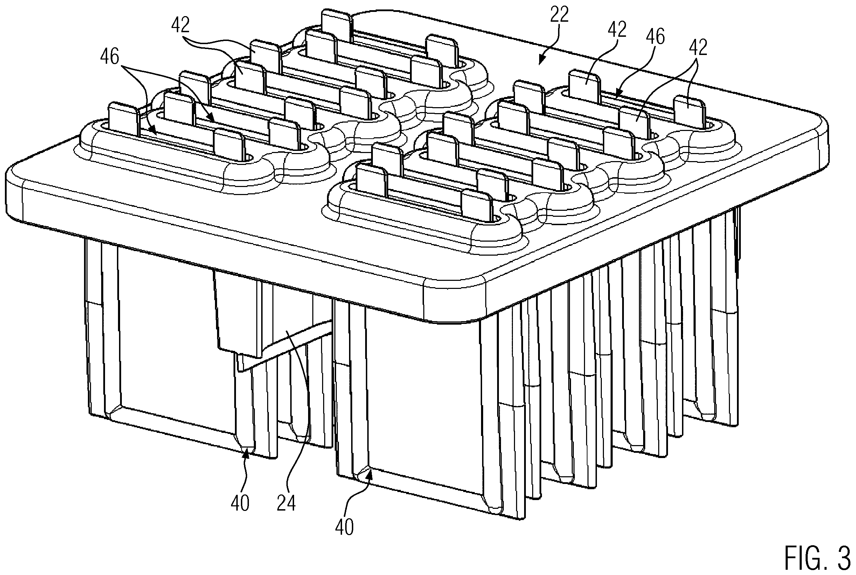

Vor der Montage wird das Abdeckelement 22 in der aus den Figuren 3 und 4 ersichtlichen Weise mit PTC-Heizelementen 40 bestückt. Die PTC-Heizelemente 40 sind dazu anschlussseitig, d.h. dort, wo die PTC-Heizelemente 40 jeweils zwei Kontaktzungen 42 aufweisen, in weibliche Steckelementaufnahmen 44 eingesteckt, die durch die Abdeckplatte 22 einteilig ausgebildet werden. Diese Steckelementaufnahmen 44 sind jeweils endseitig mit einem Längsschlitz 46 versehen, der von den Kontaktzungen 42 durchragt wird (vgl. Figuren 1, 3). Ein Längsschlitz 46 bildet ein Beispiel einer in der Abdeckplatte 22 als Beispiel einer Innenwand ausgesparten Durchtrittsöffnung aus.

Die Figur 4 verdeutlicht das Einstecken des PTC-Heizelementes 40 in die weibliche Steckelementaufnahme 44. Das PTC-Heizelement 40 hat für die beim Einstecken gefügte Steckverbindung einen Dichtkragen 48, der an die Abmessung der Steckelementaufnahme 44 angepasst ausgebildet ist und durch ein Elastomermaterial gebildet ist, welches innerhalb der Steckelementaufnahme 44 dichtend verpresst wird, so dass die Schlitze 46 gegenüber der Zirkulationskammer 14 fluiddicht abgedichtet sind. Darüber hinaus wird durch das Verpressen des den Dichtkragen 48 bildenden Materials das PTC-Heizelement 40 reibschlüssig innerhalb der Steckelementaufnahme 44 gehalten, und zwar auch in Steckrichtung, die der Längserstreckungsrichtung der Kontaktzungen 42 entspricht. In dieser Weise gefügt halten die PTC-Heizelemente 40 an der Abdeckplatte 22, auch wenn diese mit den Steckelementaufnahmen 44 nach unten ausgerichtet ist, wie dies in Figur 3 dargestellt wird.

### 2. Gehäusebasisteil

Die Figur 5 verdeutlicht in einer Schnittansicht das Wesen eines Ausführungsbeispiels eines Gehäusebasisteils, welches mit Bezugszeichen 50 gekennzeichnet ist. Das Gehäusebasisteil 50 bildet mit Bezugszeichen 52 gekennzeichnete Wandungen, die die Zirkulationskammer 16 umfänglich umgeben, d.h. die Heizkammern 16 und den Verbindungskanal 26 umfänglich umgeben. Die bei dem vorher beschriebenen Ausführungsbeispiel als separates Bauteil vorgesehene Abdeckplatte 22 ist vorliegend einteilig durch das Gehäusebasisteil 50 ausgebildet und bildet auch hier - wie bei dem ersten Ausführungsbeispiel - eine Trennwand 54 aus, die die Zirkulationskammer 16 von einer Anschlusskammer 56 trennt, in welcher vorliegend sämtliche Kontaktzungen 42 sämtlicher PTC-Heizelemente 40 freiliegen. Auch mit Bezugszeichen 58 gekennzeichnete und die Anschlusskammer umfänglich umgebende Wandungen werden durch das Gehäusebasisteil 50 ausgebildet. Schließlich werden in Verlängerung der Stutzen 6, 8 und in dieser Richtung hinter der Zirkulationskammer 16 bzw. der Anschlusskammer 56 durch das Gehäusebasisteil 50 Wandungen 60 gebildet, die eine Steuerkammer 62 umfänglich umgeben. Ein mit Bezugszeichen 64 gekennzeichneter Steuerkammerboden, von dem sich die Wandungen 60 erheben, wird teilweise durch eine der Wandungen 52 und eine der Wandungen 58 gebildet. In einer Querschnittsansicht, die parallel zu der Erstreckungsrichtung der Stutzen 6, 8 verläuft, erscheint das Gehäusebasisteil dementsprechend als im Querschnitt H-förmig mit einem einseitig an das H angesetzten U. Das Gehäusebasisteil 50 ist aus Kunststoff und als einheitliches Bauteil ausgebildet. Das Gehäusebasisteil 50 ist vorliegend aus einem Duroplasten gebildet.

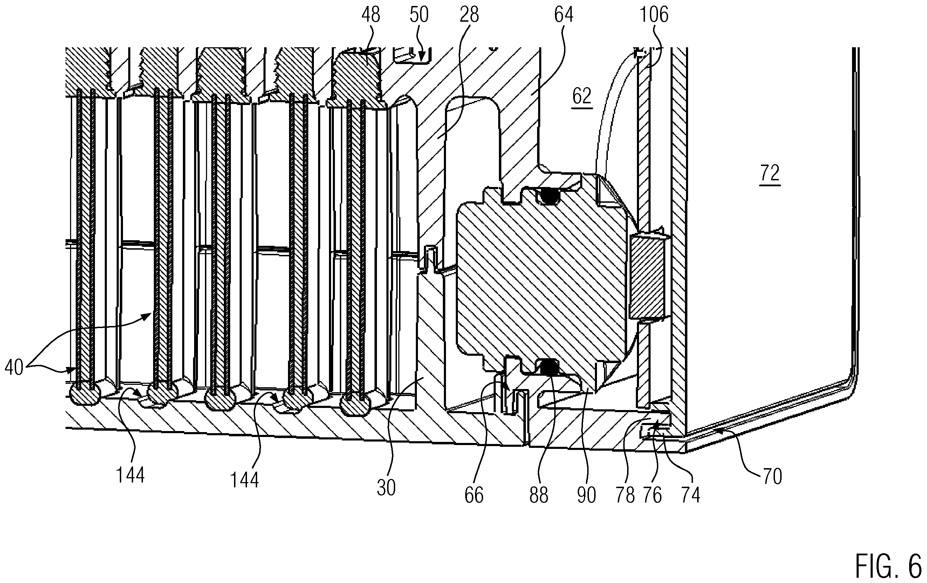

Die Wandungen 52, 58, 60 sind jeweils stirnseitig mit einer umlaufenden Nut 66, 68, 70 versehen. Die Funktion dieser Nuten 66, 68, 70 wird insbesondere durch Figur 6 verdeutlicht. So ist dort ein Abdeckelement 72 zu der Steuerkammer 62 dargestellt, welches als im Wesentlichen ebene Platte mit einem umlaufenden Kranz 74 ausgebildet ist. Dieser Kranz 74 greift in die zugehörige Nut 70 ein und verdrängt dort eingebrachten Kleber (vorliegend Epoxidkleber). Der Kranz 74 bildet einen äußeren Rand einer Gegennut 76, die an dem Abdeckelement 72 ausgeformt und innenseitig durch einen inneren Steg 78 begrenzt ist. Somit ist eine Art Labyrinthdichtung gebildet, in welche verdrängter Kleber eindringen kann, der vor der Montage des Abdeckelementes 72 entweder in die Nut 70 oder die Gegennut 76 eingebracht worden ist. In entsprechender Weise sind die Gehäusedeckel 80 zu der Zirkulationskammer 14 bzw. 82 zu der Anschlusskammer 56 randseitig ausgebildet und an dem Gehäusebasisteil 50 befestigt und dagegen abgedichtet.

Wie ebenfalls Figur 6 verdeutlicht, ist der Steuerkammerboden 64 mit einer Durchgangsöffnung 84 versehen, in die ein Kühlkörper 86 eingebracht ist. Zur Abdichtung der Zirkulationskammer 14 gegenüber der Steuerkammer 62 ist zwischen dem Kühlkörper 86 und der Innenumfangswandung der Durchgangsöffnung 84 ein Dichtring 88 vorgesehen. Der Kühlkörper 86 bildet steuergehäuseseitig einen ringförmigen Anschlag 90 aus, der gegen die stirnseitige Endfläche der Durchgangsöffnung 84 anliegt, die in Richtung auf die Steuerkammer 62 als vorspringender Kragen 92 verlängert und durch das Material des Gehäusebasisteils 50 ausgebildet ist.

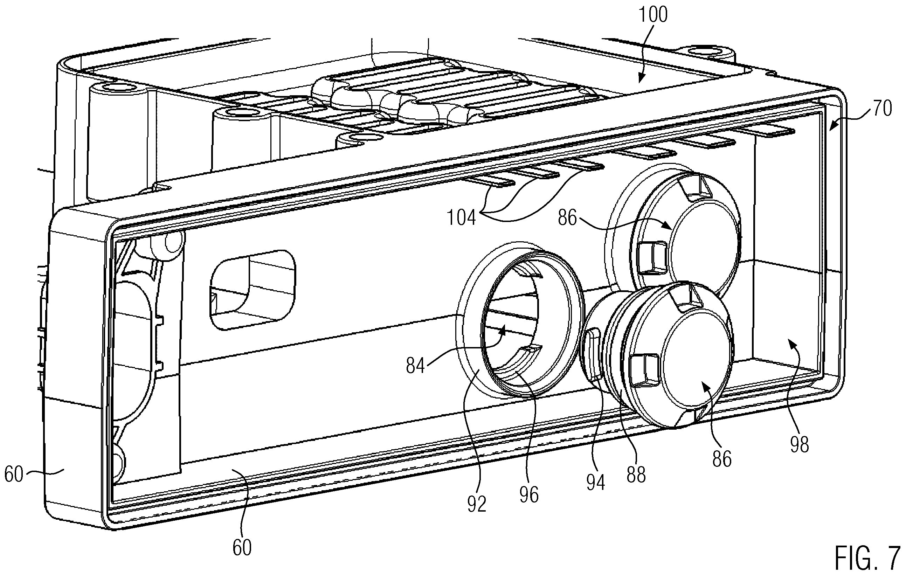

Wie Figur 7 erkennen lässt, wird die zumindest in Richtung auf die Zirkulationskammer 14 im Wesentlichen zylindrisch ausgebildete Außenumfangsfläche des Kühlkörpers 86 an gegenüberliegenden Seiten umfänglich von Verriegelungsvorsprüngen 94 überragt, die mit Verriegelungsnasen 96, die innenumfänglich die im Wesentlichen zylindrische Durchgangsöffnung 84 überragen, zusammenwirken, um einen Bajonettverschluss auszubilden, durch den der Kühlkörper 86 gegenüber dem Gehäusebasisteil 50 festgelegt ist. Der Dichtring 88 kann so ausgebildet sein, dass er diese Verriegelung unter axialer und/oder radialer Vorspannung hält. Zusätzlich kann der Steuerkammerboden 64 benachbart zu der Mündung in die Durchgangsöffnung 84 auf Seiten der Zirkulationskammer 14 mit Mulden versehen sein, in welche die Verriegelungsvorsprünge 94 eingreifen und die den Kühlkörper 86 formschlüssig drehgesichert halten, um ein unbeabsichtigtes Lösen des Bajonettverschlusses 94, 96 zu verhindern.

Die Figur 7 gibt den Blick in eine durch den Steuerkammerboden 64 und die Wandungen 60 gebildete Steuergehäusewanne frei, die im endmontierten Zustand durch das Abdeckelement 72 verschlossen ist.

Die Figur 5 zeigt oberhalb der Trennwand 54 eine durch die Trennwand 54 und die Wandungen 58 gebildete Anschlusswanne 100. Auf der in der Darstellung nach Figur 5 darunterliegenden Seite ist durch das Gehäusebasisteil 50 eine durch die Trennwand 54 und die Wandungen 52 gebildete Zirkulationswanne 102 ausgeformt. So bildet das Gehäusebasisteil 50 im Wesentlichen sämtliche Kammern 14, 56, 52, die lediglich durch die Abdeckelemente 72, 80, 82 abgedeckt werden müssen, um eine funktionsfähige und als Leichtbauteil aus Kunststoff ausgeformte elektrische Heizvorrichtung zu schaffen.

### 3. Dichtend umspritzte Stromschiene

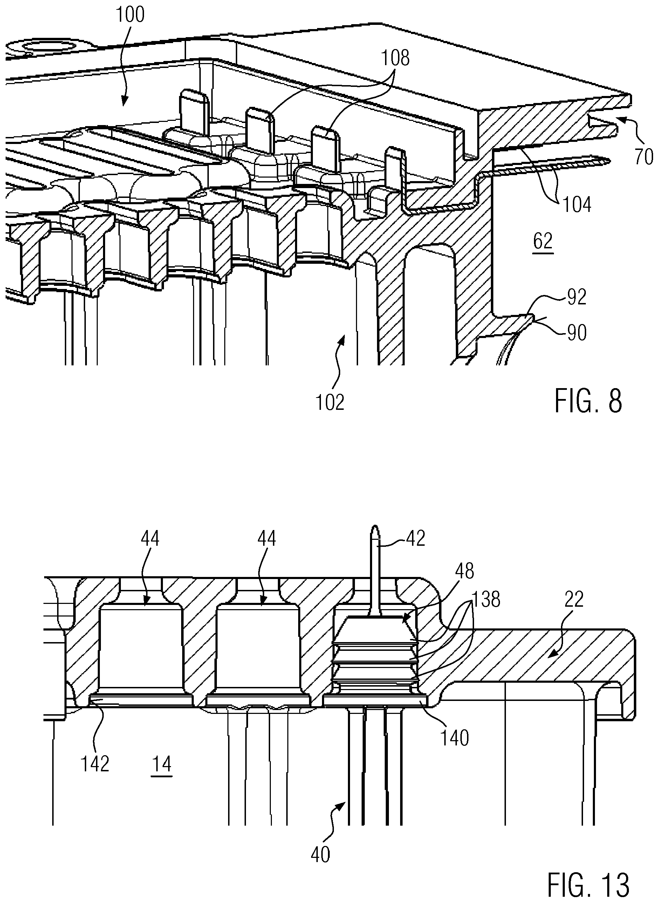

Die Figur 8 verdeutlicht eine Stromschiene 104, die als elektrische Leitungsbahn zwischen der Anschlusskammer 56 und der Steuerkammer 62 vorgesehen ist. Auf Höhe des Steuerkammerbodens 64 und innerhalb desselben ist die Stromschiene 104 zweifach gegenläufig um 90° umbogen. Ein innerhalb der Steuerkammer 62 befindliches Ende der Stromschiene 104 ist als Steckanschuss für eine innerhalb der Steuerkammer vorgesehene bestückte Leiterplatte 106 ausgebildet (vgl. Figur 6). Das andere Ende ist innerhalb der Anschlusskammer als Anschlusszunge 108 für eine innerhalb der Anschlusskammer vorgesehene und in den vorherigen Figuren weggelassene Verteilerplatte vorgesehen. Die Verteilerplatte kann gemäß EP 2 505 931 A1 ausgebildet sein. Durch mehrere hintereinander in identischer Weise vorgesehene Stromschienen 104 liegen mehrere Anschlusszungen 108 innerhalb der Anschlusskammer 56 frei. Die Anschlusszungen 108 erstrecken sich parallel zu den Kontaktzungen 42 zu den PTC-Heizelementen. So kann die Verteilerplatte zur Kontaktierung mit sämtlichen Kontakt- bzw. Anschlusszungen 42, 108 in die Anschlusskammer von oben eingesenkt werden.

### 4. Abschirmung

Die Blechstreifen 128 sind aus stanzbearbeiteten Blechen gebildet und stellen Ausführungsbeispiele für Kontaktbleche dar.

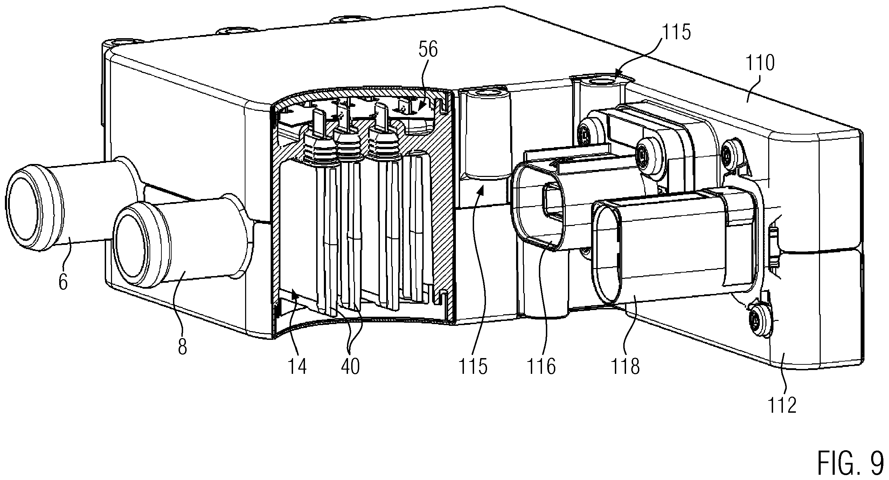

Die Figur 9 zeigt eine teilweise geschnittene Darstellung des zuvor beschriebenen Gehäuses 2. Dieses Kunststoffgehäuse 2 wird durch zwei Metallschalen 110, 112 umgeben, die eine Abschirmung der elektrischen Heizvorrichtung ausbilden, so dass elektromagnetische Strahlen nicht von dieser abgesetzt werden können. Die Teilungsebene der Metallschalen 110, 112 befindet sich in etwa auf mittlerer Höhe der beiden Stutzen 6, 8. Die Metallschalen 110, 112 umgeben das Gehäuse 2 im Wesentlichen vollumfänglich. Lediglich an dem Kunststoffgehäuse 2 ausgebildete Befestigungsvorsprünge 114 ragen durch an den Metallschalen 110, 112 ausgebildete Ausnehmungen 115 über die Metallschalen 110, 112 und die dadurch gebildete Abschirmung nach außen vor. Des Weiteren überragen mit Bezugszeichen 116 bzw. 118 gekennzeichnete Steckergehäuse, wobei das Steckergehäuse 116 für den vorliegend hochvoltigen Leistungsstrom und das Steckergehäuse 118 für die mit niedriger Voltage betriebenen Steuerleitungen vorgesehen ist. Die in Figur 9 gezeigte Ausführung erlaubt die Befestigung des Gehäuses 2 über die aus Kunststoff gebildeten Befestigungselemente 110. Mit diesem kann auf einfache Weise dem Erfordernis entsprochen werden, das Gehäuse 2 an der gewünschten Stelle innerhalb eines Kraftfahrzeuges zu befestigen. In Figur 9 sind die Metallschalen 110, 112 im Wesentlichen durchgehend ausgebildet. Sie können ebenso gut aus einem Lochblech gebildet sein, ohne dass die Wirkung der Metallschalen 110, 112 als EMV-Schutz verlorenginge.

### 5. PTC-Heizelement als Rahmenelement

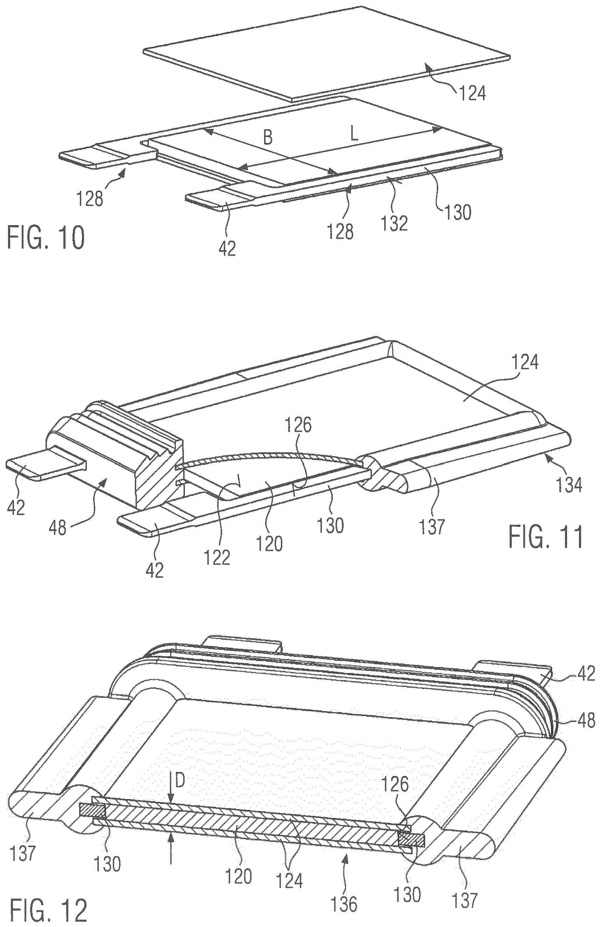

In Figur 10 ist ein PTC-Element 120 gezeigt, welches an seinen aneinander gegenüberliegenden Hauptseitenflächen 122 mit einer Isolierlage 124 belegt ist. Die Isolierlage 124 ist vorliegend eine Keramikplatte aus Aluminiumoxid. Sie kann aber auch als Beschichtung auf das PTC-Element 120 aufgebracht sein oder als Kombination einer Beschichtung mit einer ein- bzw. mehrschichtigen Isolierschicht verwirklicht sein. Das PTC-Element 120 ist als Plättchen ausgebildet mit einer Breite B bzw. einer Länge L, die um den Faktor von zumindest 10 größer sind, als die Dicke D, die dem Abstand der beiden Hauptseitenflächen 122 entspricht. Sich im Wesentlichen in Richtung der Länge L erstreckend sind an sich gegenüberliegenden Stirnseitenflächen 126 jeweils Blechstreifen 128 vorgesehen, die mit dem PTC-Element 120 verklebt und elektrisch leitend an einer oberflächigen Metallierung des PTC-Elements 120, die als Schutz mittels PVD oder CVD aufgebracht sein kann, angebunden sind. Diese Blechstreifen bilden jeweils Leiterbahnen zu unterschiedlichen Polaritäten aus, mit denen das PTC-Element 120 bestromt wird. Die Blechstreifen 12 bestehen aus einem Kontaktsteg 130, der relativ schmal ist, und der gegenüber dem Kontaktsteg 130 in Richtung der Breite B verbreiterten Kontaktzunge 42.

Die Kontaktstege 130 bilden vorliegend die Elektroden zu dem PTC-Element aus und sind mit der Metallisierung des PTC-Elements 120 elektrisch verbunden. Die Dicke der Kontaktzunge 42 ist geringer als die Dicke des Kontaktsteges 30. Dessen Dicke ist wiederum geringer als die Dicke D des PTC-Elementes. Der Blechstreifen 128 ist so vorgesehen, dass dieser an keiner Stelle die Hauptseitenflächen 122 des PTC-Elementes 120 überragt. Wie die Figuren 11 und insbesondere 12 erkennen lassen, ragen die Isolierlagen 124 seitlich über das PTC-Element 120 hinaus. Die Isolierlagen 124 haben demensprechend eine Grundfläche, die größer als die Grundfläche der Hauptseitenflächen 122 des PTC-Elementes 120 ist. Dementsprechend nehmen die äußeren Ränder der Isolierlagen 124 beidseitig den Kontaktsteg 130 zwischen sich auf (vgl. Figur 12). Jeder Kontaktsteg 130 ist mit einer der gegenüberliegenden Stirnseitenflächen 126 verklebt. Die Isolierlage 124 ist ebenfalls mit dem PTC-Element 120 verklebt. Die Isolierlage 124 liegt unmittelbar auf dem PTC-Element auf. So kontaktiert eine der Isolierlagen 124 die zugehörige Hauptseitenfläche 122 des PTC-Elementes unmittelbar.

Die Außenseite der jeweiligen Blechstreifen 128 ist vollkommen eben und erstreckt sich streng in Richtung der Länge L. Die Kontaktzungen 42 sind in Breitenrichtung größer als der Kontaktsteg 130 ausgebildet und überragen das PTC-Element 120 aufeinander zu (vgl. Figur 10). Die Kontaktzunge 42 ist auch dünner als der Kontaktsteg 130.

Der gegenüber dem Kontaktsteg 130 verbreiterte Bereich des Blechstreifens 128 ist in einem Heizelementgehäuse 134 aufgenommen, welches rahmenförmig das PTC-Element 120 umgibt. Dieser Kunststoffrahmen 134 schließt die umlaufenden Ränder der Isolierlagen 124 ein. Auch die Randflächen 132 sind von dem den Kunststoffrahmen 134 bildenden Material eingesiegelt. Der Kunststoffrahmen 134 ist durch Umspritzen eines Elastomermaterials als elastomerer Kunststoffrahmen 134 ausgebildet. Bei dem fertigen PTC-Heizelement 40 überragen lediglich die Kontaktzungen 42 an einer Stirnseite den Kunststoffrahmen 134. Alle anderen funktionalen und für die Wärmeerzeugung und Stromführung dienenden Teile des PTC-Heizelementes 40 sind innerhalb des Kunststoffrahmens 134 aufgenommen. Wie insbesondere Figur 12 verdeutlicht, liegt das PTC-Element 120 mit seinen gegenüberliegenden Hauptseitenflächen 122 hinter mit Bezugszeichen 136 gekennzeichneten und durch den Kunststoffrahmen 134 gebildeten Rahmenöffnungen. Diese Rahmenöffnungen 136 werden bedeckt durch die Isolierlage 124. Vorliegend ergibt sich nahezu überhaupt keine Überdeckung des Kunststoffrahmens 134 mit den Hauptseitenflächen 122 des PTC-Elementes, so dass dieses zu annähernd 100% seiner Hauptseitenflächen 122 hinter den Rahmenöffnungen 136 freiliegt.

Die rechtwinklig von dem Dichtkragen 48 abragenden Rahmenholme des Kunststoffrahmens 134 sind jeweils mit randseitigen Anlagenstegen 137 versehen. Die Anlagestege 137 sind nach Art von verjüngten Lamellen ausgebildet, die eine gegenüber der Dicke des Kunststoffrahmens 134 verjüngte Dicke haben. Wie sich beispielsweise auf Figur 6 entnehmen lässt, sind die PTC-Heizelement 40 jeweils hintereinander leicht versetzt vorgesehen, so dass jedes erste PTC-Heizelement 40 an der linken Seite an einer Wandung des Gehäuses 2 anliegt und dort über den dichtend gegen eine Begrenzungswand der Zirkulationskammer 14 anliegenden Anlagesteg 137 abgedichtet sind. So kann auf dieser Seite kein Fluid an dem PTC-Element 120 vorbeiströmen, wohl aber an dem in Strömungsrichtung davor bzw. dahinter liegenden PTC-Heizelement. Dieses wiederum liegt mit seinem Anlagesteg 137 an der gegenüber liegenden Seite an der die Zirkulationskammer 14 begrenzten Wandung an und verlegt dort den Strömungskanal. So wird durch alternierendes Anordnen der PTC-Heizelemente 40 ein mäandrierender Strömungskanal ausgebildet.

### 6. Steckverbindung

Der Kunststoffrahmen 134 bildet ferner den zuvor bereits beschriebenen Dichtkragen 48 aus, der mit zu dem freien Ende der Kontaktzungen 42 konisch zulaufenden Segmenten 138 versehen ist (vgl. Figur 13). Vorliegend sind drei dieser Segmente 138 in Längserstreckungsrichtung der Kontaktzunge 42 hintereinander vorgesehen. Zwischen der Rahmenöffnung 136 und diesen Segmenten 138 ist ein ringförmiger Anschlag 140 durch das Heizelementgehäuse 134 ausgebildet. Wie Figur 13 verdeutlicht, liegt dieser Anschlag dichtend gegen eine zylindrische und durch die weibliche Steckelementaufnahme 44 gebildete Gegenfläche 142 an.

Wie die Figuren 2 und 5 verdeutlichen, liegt die gegenüberliegende Seite der PTC-Heizelemente 40 nach dem Einbau an dem Boden 18 des Gehäuses 2 an. Zur genauen Positionierung sind in dem Boden 18 Vertiefungen 144 vorgesehen, in welchen die Stirnseitenflächen des Heizelementgehäuses 134 aufgenommen sind. Dadurch wird eine exakt rechtwinklige Positionierung der PTC-Heizelemente 40 relativ zu der Trennwand 54 gewährleistet. Des Weiteren wird eine Haltekraft erzeugt, die verhindert, dass die in der Trennwand 54 steckverbundenen PTC-Heizelemente 40 beim Betrieb und insbesondere aufgrund der Vibration des Fahrzeuges aus den weiblichen Steckelementaufnahmen 44 herausfallen können. Diese bodenseitige Anlage der PTC-Heizelemente 40 sichert auch die Anpresskraft innerhalb der Steckkontaktierung der PTC-Heizelemente, so dass diese sicher und auch dauerhaft die Längsschlitze 46 zu der Anschlusskammer 56 abdichten.

Es versteht sich von selbst, dass auf die Vertiefungen 144 auch verzichtet werden kann. Ähnlich zu den Anlagestegen 137 kann auch an der dem Dichtkragen 48 gegenüber liegenden Unterseite des Kunststoffrahmens 134 ein Anlagesteg 137 vorgesehen sein, der sich unter elastischer Kompression gegen den Boden 18 des Gehäuses 2 abstützt und dort abdichtet. Hierdurch wird nicht nur eine fluiddichte Abdichtung zwischen der Unterseite des PTC-Heizelementes 40 und dem Gehäuse 2 geschaffen. Vielmehr noch wird durch die Kompression des Anlagesteges auch eine Druckkraft erzeugt, welche das PTC-Heizelement 40 auch dann unverlierbar in der weiblichen Steckelementaufnahme 44 hält, wenn starke Vibrationen auf die elektrische Heizvorrichtung einwirken.

### 7. Elektrischer Anschluss der PTC-Heizelemente

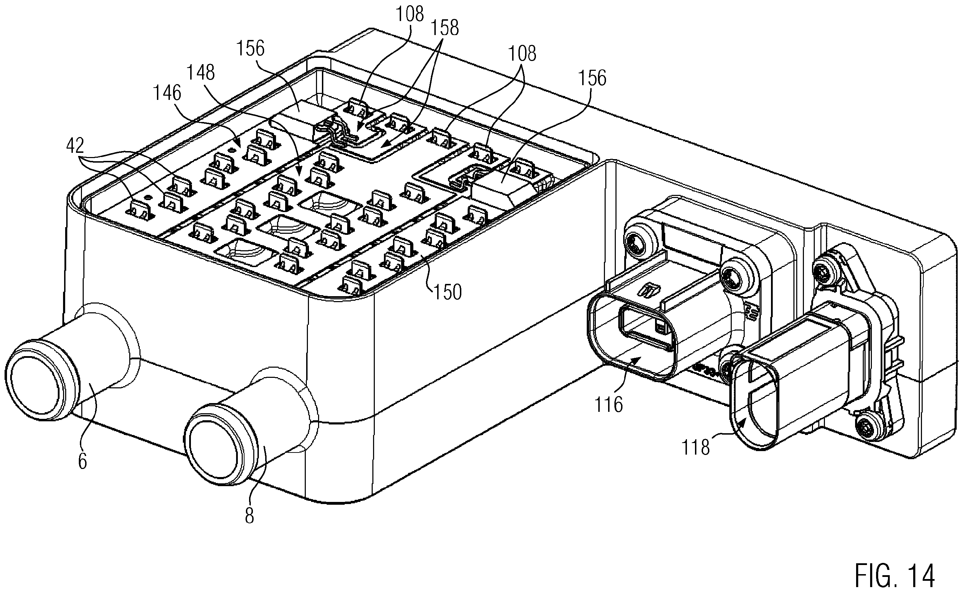

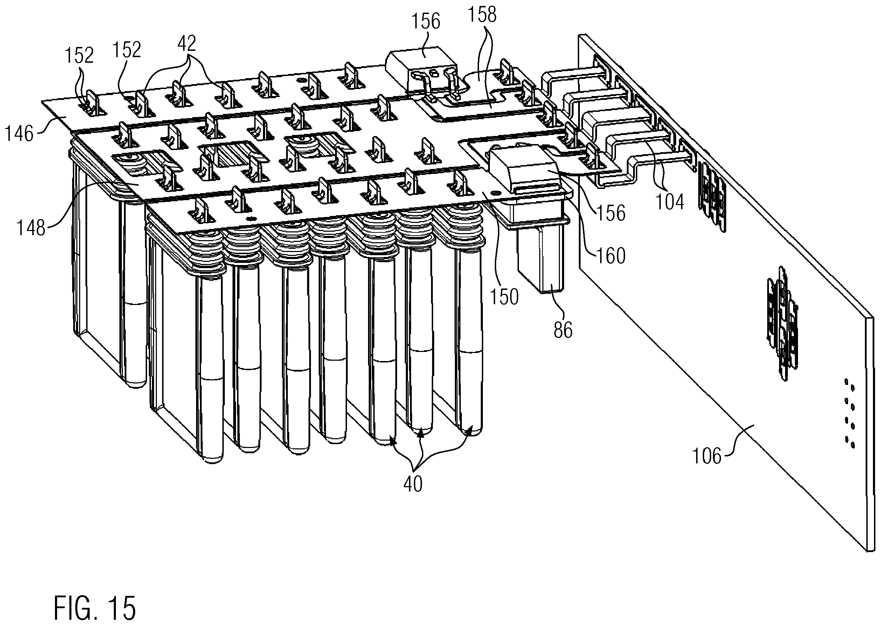

Die Figuren 14-16 verdeutlichen den elektrischen Anschluss der PTC-Heizelemente 40 am Beispiel einer weiteren Ausführungsform. Dabei zeigt Figur 15 das Ausführungsbeispiel ohne das Gehäuse 2 und Teile davon, ähnlich zu der Darstellung in Figur 3. Für den elektrischen Anschluss sind in der Anschlusskammer 56 gestanzte Bleche als Stromschienen 146, 148, 150 vorgesehen, die durch Stanzen und Biegen ausgebildete Kontaktvorsprünge 152 aufweisen, die unter elastischer Vorspannung gegen die Kontaktzungen 42 anliegen und diese kontaktieren. Die Kontaktvorsprünge 152 ragen in Aufnahmeöffnungen 154 hinein, die in den Blechstreifen der Stromschienen 146, 148, 150 ausgespart sind. Die mit Bezugszeichen 148 gekennzeichnete Stromschiene hat eine entsprechende Aufnahmeöffnung 154 mit Kontaktvorsprüngen 152 für die Stromschiene 104. Die mit Bezugszeichen 146 bzw. 148 gekennzeichneten Stromschienen sind jeweils mit einem Leistungstransistor 156 bestückt, der elektrisch leitend mit der entsprechenden Stromschiene 146, 150 verbunden und darauf montiert ist. Die Leistungstransistoren 156 sind eingangsseitig mit ebenfalls als Stromschienen ausgebildeten Zuleitern 158 verbunden, die wiederum Aufnahmeöffnungen 154 mit Kontaktvorsprüngen 152 für die Kontaktierung über jeweils eine Stromschien 104 versehen sind. Danach erfolgt die elektrische Leitung innerhalb der Einschlusskammer 56 allein durch Blechelemente. Diese Blechelemente sind ausschließlich mit den Leistungstransistoren 156 als elektrische bzw. elektronische Bauteile bestückt. Es sind keine weiteren elektrischen bzw. elektronischen Bauteile vorgesehen.

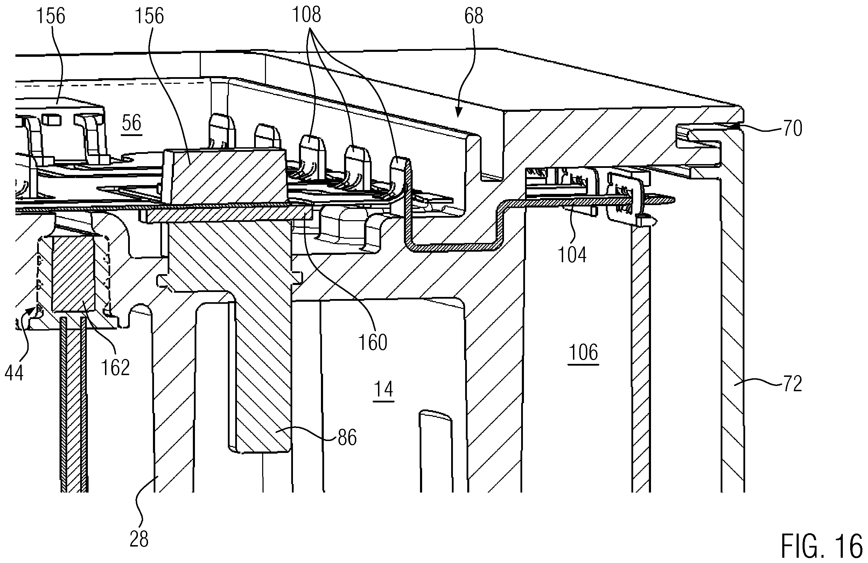

Wie insbesondere Figur 16 verdeutlicht, sind diese Metallplatten 146, 148, 150, 158 elektrisch voneinander isoliert in die Anschlusskammer 56 eingesetzt und dort positioniert. Die auf der Leiterplatte 106 verarbeiteten Steuersignale zum Ansteuern der Leistungstransistoren 146 werden über zumindest einen der Zuleiter 158 dem jeweiligen Leistungstransistor 156 zugeführt.

Die Figur 16 verdeutlicht eine Schnittansicht auf Höhe eines auch in Figur 15 mit Bezugszeichen 86 gekennzeichneten Kühlkörpers. Zwischen dem Kühlkörper 86 und dem Leistungstransistor 156 ist eine elektrische Isolierschicht 160 beispielsweise aus Kapton oder einer Keramikplatte verwirklicht. Die zwischen dieser Isolierschicht 160 und dem Leistungstransistor 156 vorgesehene Stromschiene 146, 150 führt zu einer gewissen Spreizung der von dem Leistungstransistor 156 abgegebenen Wärme. Dazu kann die Stromschiene 146 bzw. 150 zumindest im Bereich des Leistungstransistors 156 mit größerer Dicke ausgebildet sein. Ebenso gut ist es möglich, die Stromschiene 146 bzw. 150 aus Kupfer und damit einem gut wärmeleitfähigem Material auszuformen. Das Blechmaterial kann im Bereich des Leistungstransistors 156 durch Konturwalzen eine erhöhte Dicke aufweist.

Die Stromschienen 146, 148, 150, 158 können durch Stanzbearbeitung mit einer Crimplasche oder dergleichen versehen sein, die mit dem Gehäuse 2 in Wechselwirkung tritt, um die jeweilige Stromschiene 146, 148, 150, 158 an dem Gehäuse 2 befestigen und/oder den Leistungstransistor 146 unter Vorspannung gegen den Kühlkörper 86 anzulegen bzw. zu drücken.

Die Figur 16 lässt auch eine Variante des PTC-Heizelementes 40 erkennen. Danach sind die Kontaktzungen 42 innerhalb des Kunststoffrahmens 134 in einem aus einer harten Kunststoffkomponente gebildeten Befestigungsstopfen 162 aufgenommen. Die Kontaktzungen 42 sind durch Umspritzen in dem Befestigungsstopfen 162 aufgenommen. Der Befestigungsstopfen 162 besteht aus einem harten Kunststoff mit guten Kriechstrom- und Durchschlagsfestigkeit. Der Befestigungsstopfen 162 bildet einen harten Kern für das durch das PTC-Heizelement 40 gebildete männliche Steckelement. Dieser Befestigungsstopfen 162 ist lediglich durch einen dünnen Überzug aus dem weichelastischen Material des Dichtkragens 48 überzogen, wodurch die durch den Dichtkragen 48 gebildete Kompressionskraft innerhalb der weiblichen Steckelementaufnahme 44 gesteigert wird. Der Befestigungsstopfen 162 kann beispielsweise durch Umspritzen von zwei Blechstreifen 128 erfolgen, die jeweils für sich die Kontaktstege 130 und die Kontaktzungen 42 als einteiliges Bauteil ausformen. In dieser Weise vorbereitet und räumlich-körperlich relativ zueinander positioniert kann der Befestigungsstopfen 162 zusammen mit dem Blechstreifen 128 wie zuvor beschrieben mit der weichelastischen Kunststoffkomponente zur Ausbildung des Kunststoffrahmen 134 überspritzt werden.

Auch bei der Variante nach den Figuren 14-16 ist der Dichtkragen länglich ausgebildet. Es versteht sich aber von selbst, dass jede einzelne Kontaktzunge 42 in einem zylindrischen Dichtkragen mit im Grunde kreisrunder oder ovaler Querschnittsfläche angeordnet sein kann. Die weibliche Steckelementaufnahme 44 ist dann ebenfalls mit kreisrundem bzw. ovalem Querschnitt versehen. Eine solche Ausgestaltung kann die Dichtigkeit gegenüber dem konkret beschriebenen Ausführungsbeispiel erhöhen. Es versteht sich von selbst, dass auch polygonale Querschnittsflächen möglich sind.

Figur 16 lässt ferner die Befestigung des Kühlkörpers 86 innerhalb der Trennwand 54 erkennen. Der Kühlkörper 86 hat auf Höhe der Trennwand 54 an seinem Außenumfang einen den Kühlkörper 86 randseitig überragenden Befestigungskragen 164, der durch Umspritzen des die Trenne 54 bildenden Kunststoffmaterials formschlüssig eingesiegelt ist. Die Ausgestaltung des Befestigungskragens 164 verbessert im Übrigen die Dichtigkeit zwischen der Zirkulationskammer 14 und der Anschlusskammer 56.

Gemäß einer nicht dargestellten Variante kann die zu der Anschlusskammer 56 ragende Oberfläche des Kühlkörpers 86 auch von dem die Trennwand 54 ausbildenden Kunststoffmaterial überzogen sein. Beim Überspritzen des Kühlkörpers 46 kann ein dünner Film mittels Spritzgießen zwischen der Oberfläche des Kühlkörpers 86 und dem Innenraum der Anschlusskammer 56 ausgebildet sein, über welchen der Leistungstransistor 156 an dem Kühlkörper 68 elektrisch isoliert anliegt. Hierdurch wird die Fertigung weiter vereinfacht. Eine separate elektrische Isolierlage muss nicht zwischen dem Leistungstransistor 156 und dem Kühlkörper 86 vorgesehen werden.

### Bezugszeichenliste

- 2: Gehäuse
- 4: Gehäusewannenelement
- 6: Einlassstutzen
- 8: Auslassstutzen
- 10: Einlassöffnung
- 12: Auslassöffnung
- 14: Zirkulationskammer
- 16: Heizkammer
- 18: Boden
- 20: Teilungswand
- 22: Abdeckplatte
- 24: Teilungswand
- 26: Verbindungskanal
- 28: Kanalwandsegment
- 30: Kanalwandsegment
- 32: Rand
- 34: Nut
- 40: PTC-Heizelement
- 42: Kontaktzunge
- 44: weibliche Steckelementaufnahme
- 46: Längsschlitz
- 48: Dichtkragen
- 50: Gehäusebasisteil
- 52: Wandung
- 54: Trennwand
- 56: Anschlusskammer
- 58: Wandung
- 60: Wandung
- 62: Steuerkammer
- 64: Steuerkammerboden
- 66: Nut der Zirkulationskammer 14
- 68: Nut der Anschlusskammer 56
- 70: Nut der Steuerkammer 62
- 72: Abdeckelement zu der Steuerkammer 62
- 74: Kranz
- 76: Gegennut
- 78: innerer Steg
- 80: Gehäusedeckel zu der Zirkulationskammer
- 82: Gehäusedeckel zu der Anschlusskammer
- 84: Durchgangsöffnung
- 86: Kühlkörper
- 88: Dichtring
- 90: Anschlag
- 92: Kragen
- 94: Verriegelungsvorsprung
- 96: Verriegelungsnase
- 98: Steuerwanne
- 100: Anschlusswanne
- 102: Zirkulationswanne
- 104: Stromschiene
- 106: Leiterplatte
- 108: Anschlusszunge
- 110: Metallschale
- 112: Metallschale
- 114: Befestigungsvorsprung
- 115: Ausnehmung
- 116: Steckergehäuse Hochvolt
- 118: Steckergehäuse Niedrigvolt
- 120: PTC-Element
- 122: Hauptseitenfläche
- 124: Isolierlage
- 126: Stirnseitenfläche
- 128: Blechstreifen
- 130: Kontaktsteg
- 132: Randfläche
- 134: Heizelementgehäuse/Kunststoffrahmen
- 136: Rahmenöffnung
- 137: Anlagesteg
- 138: Segment
- 140: Anschlag
- 142: Gegenfläche
- 144: Vertiefung
- 146: Stromschiene
- 148: Stromschiene
- 150: Stromschiene
- 152: Kontaktvorsprung
- 154: Aufnahmeöffnung
- 156: Leistungstransistor
- 158: Zuleiter
- 160: Isolierschicht
- 162: Befestigungstopfen
- 164: Befestigungskragen
- B: Breite des PTC-Elementes
- L: Länge des PTC-Elementes
- D: Dicke des PTC-Elementes

## Patentansprüche

1. Elektrische Heizvorrichtung mit einem Gehäuse, das Ein- und Auslassöffnungen (10; 12) für ein zu erwärmendes Fluid und eine mit den Ein- und Auslassöffnungen (10; 12) kommunizierende Zirkulationskammer (14) ausbildet, in die zumindest ein PTC-Heizelement (40) mit zumindest einem PTC-Element (120) hineinragt, das mit Kontaktzungen (42) für den elektrischen Anschluss versehen ist, die in einer Anschlusskammer (56) freiliegen, die von der Zirkulationskammer (14) durch eine fluiddichte Trennwand (54) getrennt ist, wobei das Gehäuse (2) ferner eine Steuerkammer (62) zur Aufnahme einer Steuervorrichtung (106) ausbildet, die steuerungsmäßig mit dem zumindest einen PTC-Heizelement (40) gekoppelt ist, **gekennzeichnet durch** ein aus Kunststoff gebildetes, einteiliges Gehäusebasisteil (50), das die Trennwand (54) und Wandungen (52, 58) ausformt, die die Zirkulationskammer (14) und die Anschlusskammer (56) umfänglich umgeben.

2. Elektrische Heizvorrichtung nach Anspruch 1, **dadurch gekennzeichnet, dass** das Gehäusebasisteil (50) die Steuerkammer (62) umfänglich umgebende Wandungen (60) ausbildet.

3. Elektrische Heizvorrichtung nach Anspruch 1 oder 2, **dadurch gekennzeichnet, dass** das Gehäusebasisteil (50) zwischen der Zirkulationskammer (14) und der Steuerkammer (62) eine Wandung (64) ausbildet, die mit einer Durchgangsöffnung (84) versehen ist, in die ein Kühlkörper (86) dichtend eingesetzt ist, der wärmeleitend mit der Zirkulationskammer (14) gekoppelt ist.

4. Elektrische Heizvorrichtung nach Anspruch 3, **dadurch gekennzeichnet, dass** der Kühlkörper (86) in einem Kühlkanal (26) der Zirkulationskammer (14) freilegt, der von einer durch das Gehäusebasisteil (50) gebildeten Kanalwand (28, 30) begrenzt ist, die als Strahlungswärmeabschirmung zwischen dem Kühlkörper (86) und dem in der Zirkulationskammer (14) vorgesehenen PTC-Heizelement (40) vorgesehen ist.

5. Elektrische Heizvorrichtung nach einem der Ansprüche 3 oder 4, **dadurch gekennzeichnet, dass** der Kühlkörper (86) über einen Bajonettverschluss (94, 96) in der Durchgangsöffnung (84) gehalten ist.

6. Elektrische Heizvorrichtung nach einem der vorherigen Ansprüche, **dadurch gekennzeichnet, dass** das Gehäusebasisteil (50) eine die Umfangsflächen der Zirkulationskammer bildende erste Kunststoffwanne (102), eine die Umfangsflächen der Anschlusskammer bildende zweite Kunststoffwanne (100) und eine die Umfangsflächen der Steuerkammer (62) bildende dritte Kunststoffwanne (98) ausformt, wobei die erste und die zweite Kunststoffwanne (102; 100) zu gegenüberliegenden Seiten hin offen und durch die Trennwand (54) voneinander getrennt sind und die dritte Kunststoffwanne (98) sich rechtwinklig zu der ersten und der zweiten Kunststoffwanne (102; 100) erstreckt.

7. Elektrische Heizvorrichtung nach einem der vorherigen Ansprüche, **dadurch gekennzeichnet, dass** die die Anschlusskammer (56), die Zirkulationskammer (14) und/oder die Steuerkammer (62) umfänglich umgebenden Wandungen (58, 52, 60) stirnseitig mit einer umlaufenden Nut (68; 66; 70) versehen sind.

8. Elektrische Heizvorrichtung nach einem der vorherigen Ansprüche, **gekennzeichnet durch** eine sich zwischen unterschiedlichen Kammern (56, 62) erstreckende, durch Umspritzen abgedichtet in dem aus einem Duroplasten geformten Gehäusebasisteil (50) aufgenommene Stromschiene (104).

9. Elektrische Heizvorrichtung nach einem der vorherigen Ansprüche, **dadurch gekennzeichnet, dass** ein die Steuerkammer (62) unterseitig begrenzender Steuerkammerboden (64) eine die Anschlusskammer (56) umfänglich umgebende Wandung (68) ausbildet und von zumindest einer Stromschiene (104) durchsetzt ist, die in der Anschlusskammer (56) einen elektrischen Anschluss (108) zu einer in der Steuerkammer (62) aufgenommenen Leiterplatte (106) ausbildet.

10. Elektrische Heizvorrichtung nach Anspruch 9, **dadurch gekennzeichnet, dass** die Stromschiene (104) in der Anschlusskammer (56) eine sich parallel zu den Kontaktzungen (42) des PTC-Heizelementes (40) erstreckende Anschlusszunge (108) ausbildet.

11. Elektrische Heizvorrichtung nach einem der Ansprüche 3 oder 4 und 6 bis 10, soweit nicht von Anspruch 5 abhängig, **dadurch gekennzeichnet, dass** der Kühlkörper (86) mittels Umspritzen in dem Gehäuse (2) dichtend aufgenommen ist.

## Claims

1. Electric heating device with a casing which forms inlet and outlet openings (10; 12) for a fluid to be heated and a circulation chamber (14), communicating with said inlet and outlet openings (10; 12), into which at least one PTC heating element (40) with at least one PTC element (120) projects which is for electrical contact provided with contact strips (42) which are exposed in a connection chamber (56) which is separated from said circulation chamber (14) by way a fluid tight partition wall (54), where said casing (2) further forms a control chamber (62) for accommodating a control device (106) which with regard to controlling is coupled to said at least one PTC heating element (40), **characterized by** an integrally formed casing base member (50) made of plastic material which forms said partition wall (54) and walls (52, 58) which circumferentially surround said circulation chamber (14) and said connection chamber (56).

2. Electric heating device according to claim 1, **characterized in that** said casing base member (50) forms walls (60) circumferentially surrounding said control chamber (62).

3. Electric heating device according to claim 1 or 2, **characterized in that** said casing base member (50) forms a wall (64) between said circulation chamber (14) and said control chamber (62), said wall being provided with a passage opening (84) into which a cooling element (86) is sealingly inserted which is coupled to said circulation chamber (14) in a heat-conducting manner.

4. Electric heating device according to claim 3, **characterized in that** said cooling element (86) is exposed in a cooling channel (26) of said circulation chamber (14), said cooling channel being defined by a channel wall (28, 30) which is formed by said casing base member (50) and which is provided as a heat radiation shielding between said cooling element (86) and said PTC heating element (40) provided in said circulation chamber (14).

5. Electric heating device according to one of the claims 3 or 4, **characterized in that** said cooling element (86) is held in said passage opening (84) by way of a bayonet lock (94, 96).

6. Electric heating device according to one of the preceding claims, **characterized in that** said casing base member (50) forms a first plastic tub (102) forming the circumferential surfaces of said circulation chamber, a second plastic tub (100) forming the circumferential surface of said connection chamber, and a third plastic tub (98) forming the circumferential surface of said control chamber (62), where said first and second plastic tubs (102; 100) are open towards oppositely disposed sides and are separated from one another by said partition wall (54), and said third plastic tub (98) extends at a right angle to said first and second plastic tubs (102; 100).

7. Electric heating device according to one of the preceding claims, **characterized in that** said walls (58, 52, 60) circumferentially surrounding said connection chamber (56), said circulation chamber (14) and/or said control chamber (62) are provided on the face side with a circumferential groove (68; 66; 70).

8. Electric heating device according to one of the preceding claims, **characterized by** a current bar (104) extending between different chambers (56, 62), sealed by overmolding and accommodated in said casing base member (50) formed from duroplastic material.

9. Electric heating device according to one of the preceding claims, **characterized in that** a control chamber base (64) defining said control chamber (62) on the underside forms a wall (68) circumferentially surrounding said connection chamber (56) and is penetrated by at least one current bar (104) which forms an electrical connection (108) in the connection chamber (56) to a circuit board (106) accommodated in said control chamber (62).

10. Electric heating device according to claim 9, **characterized in that** said current bar (104) in said connection chamber (56) forms a connection strip (108) which extends parallel to said contact strips (42) of said PTC heating element (40).

11. Electric heating device according to one of the claims 3 or 4 and 6 to 10, to the extent not depending on claim 5, **characterized in that** said cooling element (86) is sealingly accommodated in said casing (2) by way of overmolding.

## Revendications

1. Dispositif de chauffage électrique comprenant un boitier, qui forme des ouvertures d'entrée et de sortie (10 ; 12) pour un fluide à échauffer et une chambre de circulation (14), qui communique avec les ouvertures d'entrée et de sortie (10; 12) et dans laquelle s'engage au moins un élément chauffant PTC (40) avec au moins un élément PTC (120) pourvu de fiches de contact (42) pour le raccordement électrique, qui sont librement dégagées dans un compartiment de raccordement (56) séparé de la chambre de circulation (14) par une cloison de séparation (54) étanche aux fluides, le boitier (2) formant par ailleurs un compartiment de commande (62) destiné à accueillir un dispositif de commande (106), qui est couplé, sur le plan de la commande, au dit au moins un élément chauffant PTC (40),
**caractérisé par** une pièce de base de boitier (50) en une seule partie, en matière plastique, qui forme la cloison de séparation (54) et des parois (52, 58) entourant de manière périphérique la chambre de circulation (14) et le compartiment de raccordement (56).

2. Dispositif de chauffage électrique selon la revendication 1, **caractérisé en ce que** la pièce de base de boitier (50) forme des parois (60) entourant de manière périphérique le compartiment de commande (62).

3. Dispositif de chauffage électrique selon la revendication 1 ou la revendication 2, **caractérisé en ce que** la pièce de base de boitier (50) forme, entre la chambre de circulation (14) et le compartiment de commande (62), une paroi (64) qui est pourvue d'une ouverture de passage (84) dans laquelle est inséré de manière étanche, un corps de refroidissement (86), qui est couplé par conduction calorifique, à la chambre de circulation (14).

4. Dispositif de chauffage électrique selon la revendication 3, **caractérisé en ce que** le corps de refroidissement (86) est placé de manière librement dégagée dans un canal de refroidissement (26) de la chambre de circulation (14), délimité par une paroi de canal (28, 30), qui est formée par la pièce de base de boitier (50), et qui est prévue en tant qu'écran de protection contre le rayonnement calorifique entre le corps de refroidissement (86) et l'élément chauffant PTC (40) prévu dans la chambre de circulation (14).

5. Dispositif de chauffage électrique selon la revendication 3 ou la revendication 4, **caractérisé en ce que** le corps de refroidissement (86) est maintenu dans l'ouverture de passage (84) par l'intermédiaire d'une liaison de fermeture à baïonnette (94, 96).

6. Dispositif de chauffage électrique selon l'une des revendications précédentes, **caractérisé en ce que** la pièce de base de boitier (50) réalise une première cuvette de matière plastique (102) formant les surfaces périphériques de la chambre de circulation, une deuxième cuvette de matière plastique (100) formant les surfaces périphériques du compartiment de raccordement, et une troisième cuvette de matière plastique (98) formant les surfaces périphériques du compartiment de commande (62), la première et la deuxième cuvette de matière plastique (102; 100) étant ouvertes vers des côtés mutuellement opposés et étant séparées l'une de l'autre par la cloison de séparation (54), et la troisième cuvette de matière plastique (98) s'étendant perpendiculairement à la première et à la deuxième cuvette de matière plastique (102; 100).

7. Dispositif de chauffage électrique selon l'une des revendications précédentes, **caractérisé en ce que** les parois (58, 52, 60), qui entourent de manière périphérique le compartiment de raccordement (56), la chambre de circulation (14) et/ou le compartiment de commande (62), sont pourvues sur leur côté frontal, d'une rainure périphérique (68; 66; 70).

8. Dispositif de chauffage électrique selon l'une des revendications précédentes, **caractérisé par** un rail de distribution de courant (104), qui s'étend entre différents compartiments (56, 62), et est logé de manière étanche, par surmoulage par injection, dans la pièce de base de boitier (50) moulée en une matière plastique thermodurcissable.

9. Dispositif de chauffage électrique selon l'une des revendications précédentes, **caractérisé en ce qu'**un fond de compartiment de commande (64) délimitant le compartiment de commande (62) sur son côté inférieur, forme une paroi (68) entourant de manière périphérique le compartiment de raccordement (56), et est traversé par au moins un rail de distribution de courant (104), qui réalise dans le compartiment de raccordement (56), un raccordement de branchement électrique (108) à une plaque de circuit imprimé (106) logée dans le compartiment de commande (62).

10. Dispositif de chauffage électrique selon la revendication 9, **caractérisé en ce que** le rail de distribution de courant (104) forme, dans le compartiment de raccordement (56), une fiche de raccordement (108) s'étendant parallèlement aux fiches de contact (42) de l'élément chauffant PTC (40).

11. Dispositif de chauffage électrique selon l'une des revendications 3 ou 4 et 6 à 10, dans la mesure où elles ne dépendent pas de la revendication 5, **caractérisé en ce que** le corps de refroidissement (86) est reçu de manière étanche dans le boitier (2), moyennant surmoulage.
